# EUROPÄISCHE PATENTSCHRIFT

(11) **EP 3 169 889 B1**
(45) Veröffentlichungstag und Bekanntmachung des Hinweises auf die Patenterteilung: **25.09.2019**
(21) Anmeldenummer: 15738269.8
(22) Anmeldetag: 08.07.2015
(51) Int. Cl.: F02D 19/06, F02M 43/04, F02M 47/02, F02M 61/14

(54) **DUAL-FUEL-KRAFTSTOFFINJEKTOR**
DUAL-FUEL FUEL INJECTOR
DOUBLE INJECTEUR DE CARBURANT

(30) Priorität: 19.07.2014 DE 102014010716
(43) Veröffentlichungstag der Anmeldung: 24.05.2017
(73) Patentinhaber: Woodward L'Orange GmbH, 70435 Stuttgart (DE)
(72) Erfinder: KALENBORN, Markus, 89160 Dornstadt (DE)
(74) Vertreter: Conroy, John
(86) Internationale Anmeldenummer: PCT/EP2015/001387
(87) Internationale Veröffentlichungsnummer: WO 2016/012078

(56) Entgegenhaltungen:
- EP-A1- 0 778 410
- WO-A1-2015/090494
- DE-B3-102013 000 048
- DE-C1- 3 501 236
- US-A1- 2014 196 687

## Beschreibung

Die vorliegende Erfindung betrifft einen Dual-Fuel-Kraftstoffinjektor gemäß dem Oberbegriff von Anspruch 1. Der Dual-Fuel-Kraftstoffinjektor ist z.B. mit Zündstrahl-Motoren verwendbar, insbesondere auch solchen, welche neben einem Zündstrahlbetrieb mit Brenngas (und einem Diesel- oder Schweröl-Zündstrahl) einen reinen Diesel- oder Schwerölbetrieb vorsehen. An die Stelle von Schweröl kann hierbei z.B. auch Bio-Öl oder Biokraftstoff treten.

Gasförmige Kraftstoffe gewinnen im (Groß-)Motorensektor, insbesondere bei Stationärmotoren zur Stromerzeugung, zunehmend an Bedeutung. Erdgas z.B. eignet sich wegen seiner sehr guten Verfügbarkeit und seines günstigeren Emissionspotenzials gegenüber Dieselkraftstoff ausgezeichnet für einen wirtschaftlichen und umweltschonenden Motorbetrieb.

Die Druckschriften US20147196687 A1 und EP0778410 A1 offenbaren einen Dual-Fuel-Kraftstoffinjektor, mit welchem Brenngas und Flüssigkraftstoff über je eine zugeordnete Düsennadel ausbringbar ist.

Bei denjenigen gattungsgemäßen Dual-Fuel-Kraftstoffinjektoren, insbesondere indirekt gesteuerten Injektoren (nach dem an sich bekannten Steuerprinzip Pilotventil-Aktuator-Steuerraum), welche nicht nur Steuerung einer Flüssigkraftstoff-Düsennadel sondern auch zur Steuerung wenigstens einer Gas-Düsennadel Flüssigkraftstoff als Steuerfluid verwenden, entsteht regelmäßig Mischleckage, insbesondere an den Führungen der Gas-Düsennadeln. Gerade bei mehrteiligen Mehrnadeldüsen verursacht die Notwendigkeit des Sammelns und Abführens solch gasbehafteter Flüssigleckage aus dem Kraftstoffinjektor erheblichen baulichen Aufwand.

Ausgehend hiervon liegt der vorliegenden Erfindung die Aufgabe zu Grunde, einen Dual-Fuel-Kraftstoffinjektor anzugeben, an welchem eine Behandlung von Mischleckage konstruktiv einfach für eine Anzahl gleichartiger Düsennadeln, insbesondere Gas-Düsennadeln, ermöglicht ist.

Diese Aufgabe wird mit einem Dual-Fuel-Kraftstoffinjektor mit den Merkmalen des Anspruchs 1 gelöst.

Vorteilhafte Weiterbildungen und Ausführungsformen der Erfindung sind in den weiteren Ansprüchen angegeben.

Vorgeschlagen wird erfindungsgemäß ein Dual-Fuel-Kraftstoffinjektor, insbesondere zur Verwendung mit einem ersten Kraftstoff in Form von Flüssigkraftstoff, zum Beispiel Dieselkraftstoff, Biokraftstoff, Schweröl und weiterhin mit einem zweiten Kraftstoff in Form von gasförmigem Kraftstoff bzw. Brenngas, zum Beispiel Erdgas. Der Dual-Fuel-Kraftstoffinjektor kann bevorzugt für einen Zündstrahlbetrieb einer Brennkraftmaschine bereitgestellt sein, (Flüssigkraftstoff-Zündstrahl zur Zündung des gasförmigen Kraftstoffs), daneben insbesondere auch für einen ausschließlichen Flüssigkraftstoffbetrieb. Allgemein ist der Dual-Fuel-Kraftstoffinjektor z.B. für einen Großmotor vorgesehen, zum Beispiel für ein Kraftfahrzeug wie etwa ein Schiff oder ein Nutzfahrzeug, oder zum Beispiel für eine stationäre Einrichtung wie ein Blockheizkraftwerk, ein (Not-)Stromaggregat, z.B. auch für Industrieanwendungen.

Der Dual-Fuel-Kraftstoffinjektor weist eine Mehrzahl von Düsennadeln auf, deren Hub je mittels Steuerfluid und einem zugeordneten Steuerraum steuerbar ist. Als Steuerfluid - für die mit der Erfindung vorgesehene indirekte Nadelhubsteuerung nach dem Prinzip Steuerraum-Aktuator-Pilotventil - dient hierbei insbesondere (mit dem Dual-Fuel-Kraftstoffinjektor verwendeter) Flüssigkraftstoff.

Umfasst von der Mehrzahl von Düsennadeln des Dual-Fuel-Kraftstoffinjektors ist eine Mehrzahl von ersten Düsennadeln, z.B. 2, 3, 4 oder mehr erste Düsennadeln, welche in einem ersten Düsenkörper des Dual-Fuel-Kraftstoffinjektors je für das selektive Ausbringen eines ersten Kraftstoffes angeordnet sind. Die ersten Düsennadeln sind insbesondere für das Ausbringen eines gasförmigem ersten Kraftstoffes vorgesehen, bevorzugt z.B. Erdgas, insoweit insbesondere Gas-Düsennadeln darstellend. Hierbei sind die ersten Düsennadeln erfindungsgemäß in dem ersten Düsenkörper in jeweiligen Aufnahmen angeordnet, insbesondere in den Aufnahmen auch geführt, weiterhin axial verschieblich. Die Aufnahmen sind bevorzugt mittels Axialbohrungen gebildet.

Der derart ausgestaltete Dual-Fuel-Kraftstoffinjektor weist in die Erfindung kennzeichnender Weise einen Mischleckage-Sammelkanal auf, welcher eine Mehrzahl von Aufnahmen (der ersten Düsennadeln) kommunizierend verbindet, z.B. zwei oder mehr der Aufnahmen, bevorzugt sämtliche Aufnahmen (der ersten Düsennadeln). Mit anderen Worten ist der Mischleckage-Sammelkanal bevorzugt ein der Mehrzahl von Aufnahmen gemeinsamer Sammelkanal.

Im Rahmen der vorliegenden Erfindung kann der Mischleckage-Sammelkanal der Sammlung von Mischleckage dienen, allgemein der Mischleckage-Behandlung am Dual-Fuel-Kraftstoffinjektor, welche Mischleckage regelmäßig aus vermischtem Steuerfluid und erstem Kraftstoff (insbesondere Brenngas) besteht und welche Mischleckage an den jeweiligen Aufnahmen der ersten Düsennadeln auftreten kann (d.h. entlang jeweiliger Leckage-Kriechpfade von einem düsennahen Nadelende hin zu einem jeweiligen düsenfernen Nadelende). Bevorzugt ist der Mischleckage-Sammelkanal am ersten Düsenkörper gebildet.

Weiterhin in die Erfindung kennzeichnender Weise ist am Dual-Fuel-Kraftstoffinjektor, insbesondere am ersten Düsenkörper, weiterhin ein Mischleckage-Absteuerkanal in Kommunikation mit dem Mischleckage-Sammelkanal gebildet. Über den Absteuerkanal - zum Beispiel gebildet mittels einer Bohrung - kann die Mischleckage im Rahmen der Mischleckage-Behandlung aus dem Mischleckage-Sammelkanal zum Beispiel in ein Injektorgehäuse übergeben werden, z.B. zur Absteuerung aus dem Dual-Fuel-Kraftstoffinjektor.

Der Absteuerkanal kann im Rahmen eines Kraftstoffsystems bzw. Kraftstoffeinspritzsystems (absteuerseitig) z.B. an eine Druckreguliervorrichtung geführt sein bzw. mit einer solchen kommunizieren, mittels derer im Rahmen der Mischleckage-Behandlung neben einer Absteuerung aus dem Mischleckage-Sammelkanal z.B. auch die Einstellung eines Soll-Druckniveaus im Mischleckage-Sammelkanal ermöglicht ist. Eine solche Druckreguliervorrichtung samt damit einhergehender Möglichkeiten der Mischleckage-Behandlung, welche zumindest teilweise auch auf die vorliegende Erfindung anwendbar sind, sind in einer weiteren Anmeldung der Anmelderin der vorliegenden Erfindung offenbart, welche unter dem amtlichen Aktenzeichen DE 10 2013 017 853.3 geführt wird und deren Offenbarungsgehalt hierin durch Bezugnahme eingeschlossen wird.

Ersichtlich eröffnet der derart ausgestaltete Dual-Fuel-Kraftstoffinjektor eine vorteilhaft äußerst einfache Mischleckage-Behandlung für die Mehrzahl von ersten Düsennadeln mit der Möglichkeit der baulich äußerst unaufwändigen Ausgestaltung.

Im Rahmen der vorliegenden Erfindung sind die ersten Düsennadeln bevorzugt in einer Umfangsrichtung des ersten Düsenkörpers verteilt in dem ersten Düsenkörper angeordnet, insbesondere in der Art einer Trommelmagazinierung. In Umfangsrichtung sind die ersten Düsennadeln hierbei bevorzugt zueinander auch gleich beabstandet, so dass sich eine vorteilhaft gleichmäßige Ausbringung von erstem Kraftstoff in einen Brennraum erzielen lässt, d.h. eine gute rundumseitige 360°-Abdeckung. In Weiterbildung der Erfindung ist insbesondere bei einer solchen Anordnung, bei welcher die Düsennadeln in Umfangsrichtung des ersten Düsenkörpers verteilt darin angeordnet sind, der Mischleckage-Sammelkanal als Ringkanal gebildet, d.h. die Mehrzahl von Aufnahmen, insbesondere sämtliche Aufnahmen, kommunzierend verbindend.

In weiterer Ausgestaltung der Erfindung umfasst die Mehrzahl von Düsennadeln des Dual-Fuel-Kraftstoffinjektors weiterhin eine zweite Düsennadel, welche bevorzugt in einem zweiten Düsenkörper des Dual-Fuel-Kraftstoffinjektors für das selektive Ausbringen eines zweiten Kraftstoffes, insbesondere eines Flüssigkraftstoffs (welcher bevorzugt auch als Steuerfluid der ersten Düsennadeln dient) angeordnet ist.

Angemerkt sei hierzu, dass insbesondere Ausführungsformen mit einem zweiten Düsenkörper im Rahmen der Erfindung vorteilhaft die Möglichkeit eröffnen, den Mischleckage-Sammelkanal mittels erstem und zweitem Düsenkörper zu definieren, auf einfache Weise insbesondere an Grenzflächen derselben. Zum Beispiel kann der Mischleckage-Sammelkanal mittels einer Vertiefung bzw. Ausnehmung gebildet werden, welche in eine Umfangsfläche eines der Düsenkörper aus erstem und zweitem Düsenkörper eingebracht ist und an einer Öffnungsseite mittels des weiteren Düsenkörpers aus erstem und zweitem Düsenkörper gedeckelt bzw. verschlossen ist, bevorzugt zum Beispiel mittels einer (äußeren) Umfangs- bzw. Mantelfläche des zweiten Düsenkörpers. Die Vertiefung kann eine einfach herstellbare Nut bzw. bei einem ringförmigen Mischleckage-Sammelkanal bzw. Ringkanal eine Ringnut sein.

Bevorzugt ist z.B. der zweite Düsenkörper im Rahmen der Erfindung ein zentraler Düsenkörper, welcher von dem ersten Düsenkörper mit den darin aufgenommenen ersten Düsennadeln umgeben ist, z.B. über einen Abschnitt. Bei einer solchen, bevorzugt konzentrischen Anordnung, weist der erste Düsenkörper insoweit insbesondere ringförmigen Querschnitt auf. Hieraus resultieren konstruktiv vorteilhaft einfache Lösungen zur Ausbildung des erfindungsgemäßen Dual-Fuel-Kraftstoffinjektors, z.B. dadurch, dass die Vertiefung zur Ausbildung des Mischleckage-Sammelkanals in eine gut zugängliche (innere) Umfangs- bzw. Mantelfläche des ersten Düsenkörpers eingebracht werden kann.

Um insbesondere eine gute Führung der ersten Düsennadeln in den kommunzierend verbundenen Aufnahmen zu erzielen, kann die Ausbildung des Mischleckage-Sammelkanals in einem längsmittleren Bereich der Aufnahmen vorgesehen sein. Hierdurch kann die Düsennadel oberhalb (düsenfern) als auch unterhalb (düsennah) des Mischleckage-Sammelkanals über einen Abschnitt insbesondere ununterbrochen in der Aufnahme geführt werden.

In alternativer Ausgestaltung und ebenfalls eine vorteilhaft gute Nadelführung neben einfacher baulicher Umsetzung ermöglichend, kann der Mischleckage-Sammelkanal weiterhin zwischen dem erstem Düsenkörper und einer Deckelplatte (düsenfern angeordnet) an dem ersten Düsenkörper definiert sein. Die Deckelplatte kann z.B. als Zwischenscheibe zwischen dem ersten und dem zweiten Düsenkörper angeordnet oder zum Beispiel auch unmittelbar durch den zweiten Düsenkörper gebildet sein.

Allgemein sind mit der vorliegenden Erfindung sowohl Ausführungsformen des Dual-Fuel-Kraftstoffinjektors vorgesehen, bei welchen der Mischleckage-Sammelkanal über bloße und vorteilhaft unaufwändig herstellbare radiale Einstiche und/oder Bohrungen mit den darüber kommunizierend verbundenen Aufnahmen der ersten Düsennadeln kommuniziert als auch Ausführungformen, bei welchen der Mischleckage-Sammelkanal die darüber kommunizierend verbundenen Aufnahmen der ersten Düsennadeln je anschneidet, d.h. insbesondere unmittelbar.

Insbesondere zusätzlich zu dem Mischleckage-Sammelkanal kann - das Sammelvolumen vergrößernd - an einer jeweiligen ersten Düsennadel und/oder Aufnahme weiterhin ein (mit der Aufnahme kommunizierender) Mischleckage-Sammelraum bereitgestellt sein, über welchen die Aufnahmen via den Mischleckage-Sammelkanal kommunizierend verbunden sind.

Z.B. kann insbesondere bei Ausführungformen, bei welchen der Mischleckage-Sammelkanal am ersten Düsenkörper stirnseitig bzw. am düsenfernen Ende gebildet ist, an einer jeweiligen, mit dem Mischleckage-Sammelkanal kommunizierend verbundenen Aufnahme ein Mischleckage-Sammelraum vorgesehen sein, welcher bevorzugt am düsenfernen Ende der in der Aufnahme aufgenommenen ersten Düsennadel (und weiterhin z.B. auch um eine daran angeordnete Nadelführungshülse) gebildet sein kann. Dies ermöglicht eine gute Führung der Düsennadel in der Aufnahme über einen wesentlichen Teil ihrer Länge, z.B. am düsenfernen Ende zusätzlich mittels einer Nadelführungshülse, daneben eine einfache Bildung des Sammelkanals mittels stirnseitigem Materialabtrag (am ersten Düsenkörper) samt einfacher Bildung des Mischleckage-Sammelraumes als querschnittsvergrößerter Aufahmeabschnitt ((Stufen-)Bohrung) und weiterhin eine beliebige Dimensionierung des oberen Endes der Düsennadeln für die einfache Bereitstellung eines beabsichtigten Steuerquerschnitts für die (hydraulische) Hubsteuerung der Düsennadel.

Weitere Ausführungsformen können vorsehen, einen Mischleckage-Sammelraum zum Beispiel auch zusätzlich über einen Abschnitt einer jeweiligen Aufnahme einer Gas-Düsennadel und/oder über einen Abschnitt einer jeweiligen Gas-Düsennadel zu bilden, zum Beispiel durch eine Querschnittsvergrößerung an der Aufnahme oder eine abschnittsweise Verjüngung an einer Gas-Düsennadel.

Mit der Erfindung wird auch eine Brennkraftmaschine insbesondere der eingangs genannten Art vorgeschlagen, welche wenigstens einen wie vorstehend erläuterten Dual-Fuel-Kraftstoffinjektor aufweist. Bevorzugt kann der Dual-Fuel-Kraftstoffinjektor mit einer Mischleckage-Behandlungsvorrichtung über den Absteuerkanal verbunden sein, insbesondere z.B. mit einer wie oben erwähnten Druckreguliervorrichtung einer Mischleckage-Behandlungsvorrichtung.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch eine zum Teil stark vereinfachte (Schnitt-)Ansicht eines Dual-Fuel-Kraftstoffinjektors gemäß einer ersten möglichen Ausführungsform der Erfindung.
- Fig. 1a: ein Detail aus Fig. 1.
- Fig. 2: ein Düsenkörpermodul des Dual-Fuel-Kraftstoffinjektors gemäß Fig. 1 in einer weiteren Schnittansicht.
- Fig. 3: exemplarisch und schematisch den ersten Düsenkörper des Dual-Fuel-Kraftstoffinjektors nach den Figuren 1 bis 2 in einer Schnittansicht.
- Fig. 4: den ersten Düsenkörper gemäß Fig. 3 in einer weiteren Schnittansicht.
- Fig. 5: den ersten Düsenkörper gemäß Fig. 3 und Fig. 4 in einer Schnittansicht mit aufgenommenen ersten Düsennadeln.
- Fig. 6: exemplarisch und schematisch einen ersten Düsenkörper des Dual-Fuel-Kraftstoffinjektors gemäß einer weiteren möglichen Ausführungsform der Erfindung in einer Schnittansicht.
- Fig. 7: den Düsenkörper nach Fig. 6 in einer Draufsicht von oben.
- Fig. 8: den Düsenkörper nach Fig. 6 und 7 in einer Schnittansicht, wobei der Schnitt durch den Mischleckage-Sammelkanal geführt ist.
- Fig. 9: exemplarisch und schematisch einen ersten Düsenkörper des Dual-Fuel-Kraftstoffinjektors gemäß noch einer möglichen Ausführungsform der Erfindung.
- Fig. 10: exemplarisch und schematisch eine Schnittansicht des Düsenkörpermoduls eines Dual-Fuel-Kraftstoffinjektors mit einem Düsenkörper nach Fig. 9.

In der nachfolgenden Beschreibung und den Zeichnungen entsprechen gleichen Bezugszeichen Elemente gleicher oder vergleichbarer Funktion.

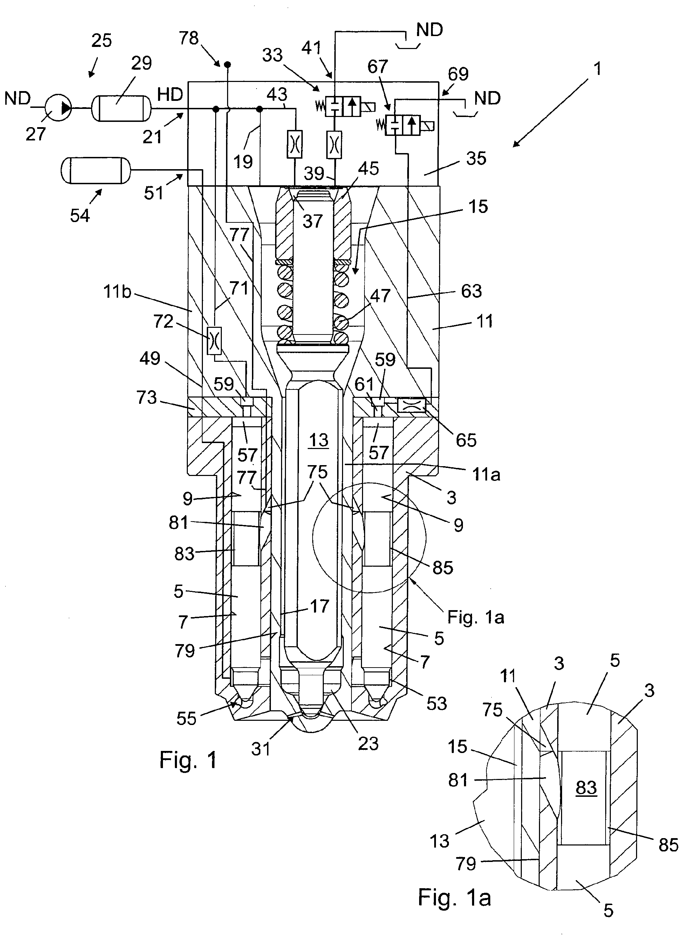

**Fig. 1** zeigt exemplarisch einen erfindungsgemäßen Dual-Fuel-Kraftstoffinjektor (Zweistoffdüse bzw. Zweistoff-Injektor) 1, welcher sowohl für einen Einspritzbetrieb mit einem ersten, flüssigen Kraftstoff (insbesondere Dieselkraftstoff, Bio- oder Schweröl) als zur Ausbringung eines zweiten, gasförmigen Kraftstoffes (Brenngas, z.B. Erdgas) vorgesehen werden kann, insbesondere zur Brenngaseinblasung. Der Dual-Fuel-Kraftstoffinjektor 1 ist mit einem Dual-Fuel-Kraftstoffeinspritzsystem verwendbar, insbesondere mit einem Gas-Common-Rail-System, weiterhin insbesondere mit einer Brennkraftmaschine, welche für einen Zündstrahlbetrieb (mit eingeblasenem Brenngas und eingespritztem Flüssigkraftstoff-Zündstrahl) und bevorzugt auch für ausschließlichen Flüssigkraftstoffbetrieb via den Dual-Fuel-Kraftstoffinjektor 1 eingerichtet ist.

Der Dual-Fuel-Kraftstoffinjektor 1 weist einen ersten Düsenkörper 3 auf, in welchem mehrere erste Düsennadeln 5 je axial verschieblich angeordnet sind. Die ersten Düsennadeln 5 sind für das selektive Ausbringen eines ersten, gasförmigen Kraftstoffs bereitgestellt, i.e. für das Ausbringen von Brenngas (im Rahmen einer Brenngas-Einblasung in einen Brennraum einer Brennkraftmaschine), insoweit sind dieselben nachfolgend auch als Gas-Düsennadeln 5 bezeichnet. Aufgenommen und axial verschieblich geführt sind die Gas-Düsennadeln 5 im ersten Düsenkörper 3 jeweils in einer zugehörigen Aufnahme 7 im ersten Düsenkörper 3, gebildet mittels einer jeweiligen Axialbohrung 9 im ersten Düsenkörper 3.

Die ersten Düsennadeln 5 sind - insbesondere äquidistant - in Umfangsrichtung des Dual-Fuel-Kraftstoffinjektors 1 bzw. des ersten Düsenkörpers 3 verteilt in dem ersten Düsenkörper 3 angeordnet, d.h. entlang einer Kreisbahn (wobei der erste Düsenkörper 3 gleichsam eines Trommelmagazins für die Gas-Düsennadeln 5 ausgestaltet ist). Bei dem veranschaulichten Dual-Fuel-Kraftstoffinjektor 1 sind zum Beispiel vier Gas-Düsennadeln 5 im ersten Düsenkörper 3 - in Umfangsrichtung verteilt - angeordnet, womit eine rundumseitig über 360° vorteilhaft gleichmäßige Gas-Einbringung in einen Brennraum erzielbar ist. Denkbar sind aber auch Ausführungsformen mit zwei, drei, fünf oder einer davon verschiedenen Anzahl von Gas-Düsennadeln 5.

Der Dual-Fuel-Kraftstoffinjektor 1 weist weiterhin einen zweiten Düsenkörper 11 auf, in welchem eine zweite Düsennadel 13 bereitgestellt ist, d.h. für Einspritzvorgänge, welche das selektive Ausbringen eines zweiten Kraftstoffs, insbesondere Flüssigkraftstoffs (in einen Brennraum einer Brennkraftmaschine) vorsehen. Die zweite Düsennadel 13, nachfolgend insoweit auch als Flüssigkraftstoff-Düsennadel 13 bezeichnet, ist ebenfalls axial hubsteuerbar und in einer korrespondierenden Aufnahme 15 des zweiten Düsenkörpers 11 aufgenommen, welche Aufnahme 15 des zweiten Düsenkörpers 11 mittels einer axialen Bohrung 17 im zweiten Düsenkörper 11 gebildet ist.

Der Dual-Fuel-Kraftstoffinjektor 1 umfasst weiterhin einen Hochdruckkanal 19, welcher von einem Flüssigkraftstoffeinlass 21 des Dual-Fuel-Kraftstoffinjektors 1 zu einem Flüssigkraftstoff-Düsenraum 23 im zweiten Düsenkörper 11, gebildet mittels der axialen Bohrung 17, führt. An den Flüssigkraftstoff-Einlass 21 kann Flüssigkraftstoff seitens einer Hochdruck (HD)-Versorgungsvorrichtung 25 eines Kraftstoffeinspritzsystems, zum Beispiel gebildet mittels einer Hochdruckpumpe 27 und einem Rail 29 und/oder auch einem Einzeldruckspeicher zugefördert werden, insbesondere ausgehend von einem Flüssigkraftstoffvorrat, z.B. einem Tank.

Für das selektive Ausbringen von Flüssigkraftstoff ist der Dual-Fuel-Kraftstoffinjektor 1 weiterhin eingerichtet, in den Flüssigkraftstoff-Düsenraum 23 eingebrachten, hochdruckbeaufschlagten Flüssigkraftstoff in Abhängigkeit der (Hub-)Stellung der zweiten Düsennadel 13 über eine Flüssigkraftstoff-Düsenanordnung 31 des Dual-Fuel-Kraftstoffinjektors 1 abzugeben, bei einem Einspritzbetrieb (zum Beispiel reiner Flüssigkraftstoffbetrieb oder Zündstrahlbetrieb) insbesondere in einen Brennraum einer Brennkraftmaschine einzuspritzen.

Für eine Hubsteuerung der zweiten Düsennadel 13 im Rahmen von Einspritzvorgängen weist der vorliegend als indirekt betätigter Injektor bereitgestellte Dual-Fuel-Kraftstoffinjektor 1 - wie in Fig. 1 dargestellt - weiterhin ein Pilotventil (Steuer- bzw. Servoventil) 33 auf, welches bevorzugt von einer Magnetaktuatorik (oder zum Beispiel von einer Piezoaktuatorik) beherrscht wird. Über das bevorzugt samt seiner Aktuatorik in einem Injektorgehäuse 35 aufgenommene Pilotventil 33 kann ein der zweiten Düsennadel 13 zugeordneter Steuerraum 37 des Dual-Fuel-Kraftstoffinjektors 1 ventilstellungsabhängig entlastet werden, insbesondere über einen Leckageströmungsweg 39 des injektorinternen Kraftstoffsystems. Der Leckageströmungsweg 39 führt ausgehend von dem Steuerraum 37 zu einem niederdruckseitigen (ND) (Steuer-)Leckageauslass 41 des Dual-Fuel-Kraftstoffinjektors 1, das heißt über das Pilotventil 33 (unter Drosselung) zum Beispiel zu einem Leckagesammelbehältnis (Tank).

An den Steuerraum 37 für die zweite Düsennadel 13 führt weiterhin ein Hochdruckpfad 43 des injektorinternen Kraftstoffsystems (mit Drosselung), über welchen der Steuerraum 37 - via hochdruckbeaufschlagten Flüssigkraftstoff - ausgehend von dem Hochdruckkanal 19 belastbar ist. Der Steuerraum 37 ist bevorzugt mittels einer Nadelführungshülse 45 (und dem Injektorgehäuse 35) definiert, welche Nadelführungshülse 45 am düsenfernen Ende der axialen Bohrung 17 des zweiten Düsenkörpers 11 in demselben aufgenommen ist, wobei in der axialen Bohrung 17 weiterhin eine Schließfeder 47 angeordnet sein kann, welche die zweite Düsennadel 13 in Schließstellung drängt, i.e. gegen einen Ventilsitz bzw. Düsennadelsitz benachbart zu der Flüssigkraftstoff-Düsenanordnung 31.

Um für einen Flüssigkraftstoff-Einspritzbetrieb Flüssigkraftstoff über die Flüssigkraftstoff-Düsenanordnung 31 auszubringen, i.e. seitens des Flüssigkrafstoff-Düsenraums 23, kann das (Schließ-)Kräftegleichgewicht an der zweiten Düsennadel 13 durch Entlastung des Steuerraums 37 via das Pilotventil 33 aufgelöst werden (Leckageströmungsweg 39 geöffnet), so dass die zweite Düsennadel 13 von dem Ventilsitz abheben und den Strömungsweg zu den Spritzlöchern der Flüssigkraftstoff-Düsenanordnung 31 freigeben kann. Für ein Schließen des Düsenventils wird das Pilotventil 33 in Sperrstellung geschaltet (siehe Fig. 1), woraufhin sich der Druck im Steuerraum 37 über den Hochdruckpfad 43 wieder aufbaut und die zweite Düsennadel 13 schließfederkraftunterstützt in den Nadelsitz zurückkehrt.

Als Steuerfluid zur Belastung und Entlastung des Steuerraums 37 bzw. zur (hydraulischen) Hubsteuerung der zweiten Düsennadel 13 dient hierbei ersichtlich der Flüssigkraftstoff.

Für den Betrieb mit gasförmigem Kraftstoff (Erdgas, Biogas, etc.) weist der Dual-Fuel-Kraftstoffinjektor 1 weiterhin einen Gas-Hochdruckkanal 49 auf, welcher von einem Brenngas-Einlass 51 am Dual-Fuel-Kraftstoffinjektor 1 zu einem gemeinsamen Gas-Düsenraum 53 der Mehrzahl von ersten Düsennadeln 5 führt (oder alternativ zu einer Mehrzahl von Gas-Düsenräumen 53 verzweigt). An den Brenngas-Einlass 51 kann Brenngas seitens einer Versorgungsanordnung 54 eines Kraftstoffeinspritzsystems versorgt werden, z.B. mit Druckniveaus bis ca. 350bar.

Aus dem Gas-Düsenraum 53 kann darin via den Gas-Hochdruckkanal 49 eingebrachtes, Brenngas in Abhängigkeit der Hubstellung der ersten Düsennadeln 5 abgegeben werden. Hierbei ist via eine jeweilige Gas-Düsennadel 5 ein jeweiliger Strömungsweg von dem Gas-Düsenraum 53 zu wenigstens einem, der Gas-Düsennadel 5 zugeordneten Gas-Spritzloch einer Gas-Düsenanordnung 55 des Dual-Fuel-Kraftstoffinjektors 1 selektiv absperrbar. Im Hinblick auf die Gas-Düsenanordnung 55 können einer jeweiligen ersten Düsennadel 5 hierbei ein oder mehrere über dieselbe selektiv freigebbare Spritzlöcher zugeordnet sein, z.B. je zwei Spritzlöcher.

Für die Hubsteuerung der Mehrzahl von Gas-Düsennadeln 5 ist der Dual-Fuel-Kraftstoffinjektor 1 analog dem vorstehend für die Hubsteuerung der Flüssigkraftstoff-Düsennadel 13 geschilderten Wirkprinzip eingerichtet, i.e. für eine indirekte Steuerung der ersten Düsennadeln 5. Insoweit ist - wie auch in Fig. 1 veranschaulicht - jeder der ersten Düsennadeln 5 am Dual-Fuel-Kraftstoffinjektor 1 ein Steuerraum 57 zur Beaufschlagung mit einem Steuerfluid zugeordnet bzw. für dieselbe bereitgestellt. Als Steuerfluid für die indirekte Steuerung der Gas-Düsennadeln 5 dient hierbei - wie für die Flüssigkraftstoff-Düsennadel 13 - der über den Flüssigkraftstoffeinlass 21 an den Dual-Fuel-Kraftstoffinjektor 1 versorgte Flüssigkraftstoff.

Insbesondere um die ersten Düsennadeln 5 vorteilhaft einfach steuern zu können, zudem auch sämtlich und weiterhin synchron, weist der Dual-Fuel-Kraftstoffinjektor 1 bevorzugt einen Steuerkanal 59 auf, welcher insbesondere als gemeinsamer Vorsteuerraum für die Mehrzahl von ersten Düsennadeln 5 bereitgestellt ist und welcher über das Steuerfluid (Flüssigkraftstoff) be- und entlastbar ist. An den Steuerkanal 59 sind die Steuerräume 57 für die ersten Düsennadeln 5 kommunizierend angebunden, d.h. je über eine Zulaufdrosselvorrichtung, zum Beispiel gebildet mittels einer Drosselbohrung 61. Ein Ablaufzweig 63 zur Entlastung des Steuerkanals 59, mithin zur gemeinschaftlichen Entlastung der Steuerräume 57 der ersten Düsennadeln 5, ist seitens des Steuerkanals 59 über eine Ablaufdrosselvorrichtung 65 geführt, das heißt hin zur Niederdruckseite (ND).

Weiterhin zur Hubsteuerung der ersten Düsennadeln 5 via selektive Entlastung des Steuerkanals 59 bzw. der Steuerräume 57 der ersten Düsennadeln 5 ist - analog zum Flüssigkraftstoffbetrieb - ein weiteres Pilotventil (Steuerventil) 67 am Dual-Fuel-Kraftstoffinjektor 1 bereitgestellt. Das weitere Pilotventil 67 ist (samt seiner Aktuatorik) ebenfalls in dem Injektorgehäuse 35 aufgenommen. In Abhängigkeit der Ventilstellung des weiteren Pilotventils 67 kann der Steuerkanal 59 über den über das weitere Pilotventil 67 geführten Steuerfluid-Ablauf 63 entlastet werden, d.h. zum niederdruckseitigen (ND) Leckageauslass 69, z.B. zu einem Leckagesammelbehältnis (Tank).

Um für einen Brenngas-Einblasbetrieb Brenngas über die zweite Düsenanordnung bzw. Gas-Düsenanordnung 55 ausbringen zu können, i.e. seitens des Gas-Düsenraums 53, kann das (Schließ-)Kräftegleichgewicht an einer jeweiligen ersten Düsennadel 5 durch Entlastung des Steuerkanals 59 und insoweit des jeweiligen kommunizierend angebundenen Steuerraums 57 für die erste Düsennadel 5 via das weitere Pilotventil 67 aufgelöst werden (Ablauf 63 geöffnet), so dass die jeweilige erste Düsennadel 5 von einem Ventilsitz abheben und den Strömungsweg zu einem Spritzloch an der Gas-Düsenanordnung 55 freigeben kann. Für ein Schließen des Düsenventils wird das weitere Pilotventil 67 in Sperrstellung geschaltet (s. Fig. 1), woraufhin sich der Druck im Steuerkanal 59 und insoweit im kommunizierend angebundenen Steuerraum 57 für die erste Düsennadel 5 über einen Flüssigkraftstoff-Hochdruckpfad 71 mit einer Zulaufdrossel 72 wieder aufbaut und die jeweilige erste Düsennadel 5 schließfederkraftunterstützt in den Nadelsitz zurückkehrt.

Gemäß z.B. Fig. 1 und eine kompakte Ausgestaltung begünstigend, weist der zweite Düsenkörper 11 bevorzugt ein gestuftes Profil auf, d.h. mit einem ersten, düsennahen Abschnitt 11a und einem demgegenüber querschnittsvergrößerten zweiten, düsenfernen Abschnitt 11b. Hierbei umgibt der erste Düsenkörper 3 - welcher ringförmigen Querschnitt aufweist - den ersten, querschnittsangepassten Abschnitt 11a des zweiten Düsenkörpers 11, wobei - in axialer Richtung betrachtet - zwischen dem ersten 3 und zweiten 11 Düsenkörper bevorzugt ein den ersten Düsenkörper 3 deckelndes Element 73 angeordnet ist, insbesondere in Form einer Zwischenscheibe.

Mit dieser Anordnung kann ein jeweiliger Steuerraum 57 für die ersten Düsennadeln 5 vorteilhaft einfach mittels des ersten Düsenkörpers 3 sowie der Zwischenscheibe 73 (und dem Ende der jeweiligen Gas-Düsennadeln 5) gebildet sein, das heißt am düsenfernen Ende einer jeden Aufnahme 7 einer ersten Düsennadel 5. Weiterhin kann der Steuerkanal 59 ebenfalls einfach herzustellend mit der Zwischenscheibe 73 und/oder dem zweiten Düsenkörper 11 definiert sein. Optional kann eine Schließfeder an einer jeweiligen ersten Düsennadel 5 vorgesehen sein, welche die Gas-Düsennadel 5 insbesondere im Nichtbetriebsfall des Dual-Fuel-Kraftstoffinjektors 1 in Schließstellung drängt.

Während des Betriebs des erfindungsgemäßen Dual-Fuel-Kraftstoffinjektors 1 fällt regelmäßig Mischleckage in Form gasbehafteter Flüssigleckage an, das heißt entlang jeweiliger bzw. an den jeweiligen Aufnahmen 7 der ersten Düsennadeln 5. Ursächlich für die Mischleckageentstehung kann Flüssigkraftstoff ausgehend von einem jeweiligen Steuerraum 57 am Außenumfang einer ersten Düsennadel 5 in der dieser zugehörigen Aufnahme 7 in Richtung zu dem Gas-Düsenraum 53 kriechen (entlang eines Kriechspalts zwischen Düsennadel 5 und Aufnahme 7), während Brenngas entlang eines solchen Kriech- bzw. Führungsspalts zwischen Aufnahme 7 und Gas-Düsennadel 5 hin zu dem zugehörigen Steuerraum 57 verdrängt werden kann.

Insbesondere um solche Mischleckage nunmehr vorteilhaft einfach einer Mischleckage-Behandlung zugänglich zu machen, weist der erfindungsgemäße Dual-Fuel-Kraftstoffinjektor 1 einen Mischleckage-Sammelkanal 75 auf, welcher die Mehrzahl von Aufnahmen 7 kommunizierend verbindet. Bei der Ausgestaltung nach Fig. 1 ist der Mischleckage-Sammelkanal 75 insbesondere als - sich in Umfangsrichtung erstreckender - Ringkanal gebildet und weiterhin insbesondere sämtliche Aufnahmen 7 der ersten Düsennadeln 5 kommunizierend verbindend bereitgestellt.

Weiterhin für die beabsichtigte Behandlung der Mischleckage ist am Dual-Fuel-Kraftstoffinjektor 1 erfindungemäß auch ein Mischleckage-Absteuerkanal 77 in Kommunikation mit dem Mischleckage-Sammelkanal 75 gebildet. Über den Mischleckage-Absteuerkanal 77 und den Mischleckage-Sammelkanal 75 kann die an den Aufnahmen 7 auftretende Mischleckage zuverlässig aus den Aufnahmen 7 und weiterhin aus dem ersten Düsenkörper 3 bzw. dem Kraftstoffinjektor 1 abgezogen werden, insbesondere über einen (absteuerseitigen) Auslass 78 des Absteuerkanals 77 an eine nachgeordnete Behandlungsvorrichtung, insbesondere gebildet mittels einer Druckreguliervorrichtung der eingangs genannten Art, übergeben werden.

Insbesondere eine Ausgestaltung des Dual-Fuel-Kraftstoffinjektors 1 gemäß z.B. Fig. 1, bei welcher der erste Düsenkörper 3 den zweiten Düsenkörper 11 über einen Abschnitt 11a umfängt, ermöglicht hierbei eine baulich äußerst unaufwändige Bereitstellung des Mischleckage-Sammelkanals 75. Hierauf wird nachfolgend noch näher eingegangen.

Bei dem Dual-Fuel-Krafstoffinjektor 1 gemäß Fig. 1 - s. a. die Figuren 1a mit 5 - ist der Mischleckage-Sammelkanal 75 mittels einer ringförmigen Vertiefung bzw. Aussparung gebildet, insbesondere mittels einer Ringnut. Eingebracht ist die Ringnut in die innere Umfangsfläche 79 des ersten Düsenkörpers 3, wobei die Ringnut an ihrer dem Nutgrund entgegengesetzten Seite bzw. Öffnungsseite mittels des zweiten Düsenkörpers 11 unter Bildung eines allseitig umschlossenen Ringraums bzw. Ringkanals gedeckelt ist (d.h. via den (verjüngten) Endabschnitt 11a des zweiten Düsenkörpers 11 (bzw. dessen Umfangsmantelfläche), welcher die (Durchgangs-)Öffnung des ersten Düsenkörpers 3 durchtaucht). Der so auf einfache Weise gebildete Mischleckage-Sammelkanal 75 kommuniziert mit einer jeweiligen Aufnahme 7 einer ersten Düsennadel 5 über eine Stichleitung 81, insbesondere je gebildet mittels einer unaufwändig zu fertigenden Bohrung (welche bevorzugt als Schrägbohrung ausgeführt ist und sich radial weg von dem Mischleckage-Sammelkanal 75 hin zu der jeweiligen Aufnahme 7 erstreckt). Wie die Ringnut können auch die Bohrungen 81 bei einer solchen Ausgestaltung des Dual-Fuel-Kraftstoffinjektors 1 vorteilhaft gut zugänglich von der Innenmantelfläche 79 des ersten Düsenkörpers 3 ausgehend angelegt werden.

Das Mischleckage-Sammelvolumen vergrößernd ist bei der Ausführungsform nach Fig. 1 bis Fig. 5 ersichtlich weiter vorgesehen, eine jeweilige in der Aufnahme 7 geführte erste Düsennadel 5 über einen längsmittleren Abschnitt 83 in ihrem Querschnitt zu verringern, wobei zwischen der Wand der Aufnahme 7 und dem verjüngten Abschnitt 83 ein Mischleckage-Sammelraum 85 bereitgestellt wird, d.h. in Form einer Ringkammer. Über den so gebildeten Mischleckage-Sammelraum 85 und die davon abzweigende Schrägbohrung 81 kommuniziert die Aufnahme 7 mit dem Mischleckage-Sammelkanal 75.

**Fig. 1a** veranschaulicht den Mischleckage-Sammelraum 85 an einer ersten Düsennadel 7 samt Schrägbohrung 81 noch näher.

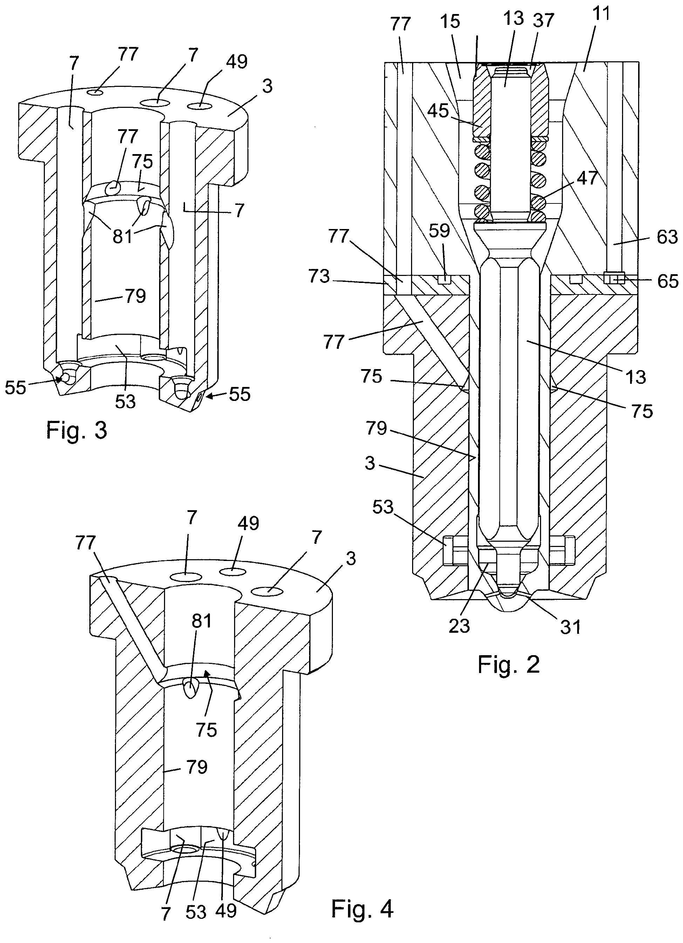

**Fig. 2** zeigt eine weitere Schnittansicht des Dual-Fuel-Kraftstoffinjektors 1 nach Fig. 1, insbesondere dessen mittels erstem 3 und zweitem 11 Düsenkörper sowie der Zwischenscheibe 73 gebildeten Düsenkörpermodul. Wie aus Fig. 2 ersichtlich, ist der in Kommunikation mit dem Mischleckage-Sammelkanal 75 stehende Mischleckage-Absteuerkanal 77 über einen Abschnitt im ersten Düsenkörper 3 als einfach zu fertigende Schrägbohrung gebildet, wobei sich der Mischleckage-Absteuerkanal 77 weiterhin durch die Zwischenscheibe 73 und durch den zweiten Düsenkörper 11 je als axialer Bohrkanal erstreckt.

**Fig. 3, Fig. 4** und **Fig. 5** zeigen weitere Schnittansichten des ersten Düsenkörpers 3 des Dual-Fuel-Kraftstoffinjektors 1 nach Fig. 1 und Fig. 2, insbesondere den Querschnitt des Mischleckage-Sammelkanals 75 bzw. die zu dessen Bildung in den ersten Düsenkörper 3 eingebrachte ringförmige Vertiefung näher veranschaulichend. Ersichtlich ist der Sammelkanal 75 vorliegend als Keilnut gebildet. Bei dieser Ausgestaltung, bei welcher der Mischleckage-Sammelkanal 75 nur geringen Querschnitt aufweist und die Anbindung der Aufnahmen 7 über Stichbohrungen 81 erfolgt, wird die Stabilität des Düsenkörpers 3 nicht nennenswert beeinträchtigt, so dass der Mischleckage-Sammelkanal 75 vorteilhaft auch in strukturell schwächeren Bereichen am ersten Düsenkörper 3 ausgebildet werden kann. Auch kann die jeweilige erste Düsennadel 5 über einen Abschnitt oberhalb und einen Abschnitt unterhalb des Mischleckage-Sammelraums 85 bzw. des Mischleckage-Sammelkanals 75 in der Aufnahme 7 geführt werden, einhergehend mit einer guten Abdichtung an der Aufnahme 7.

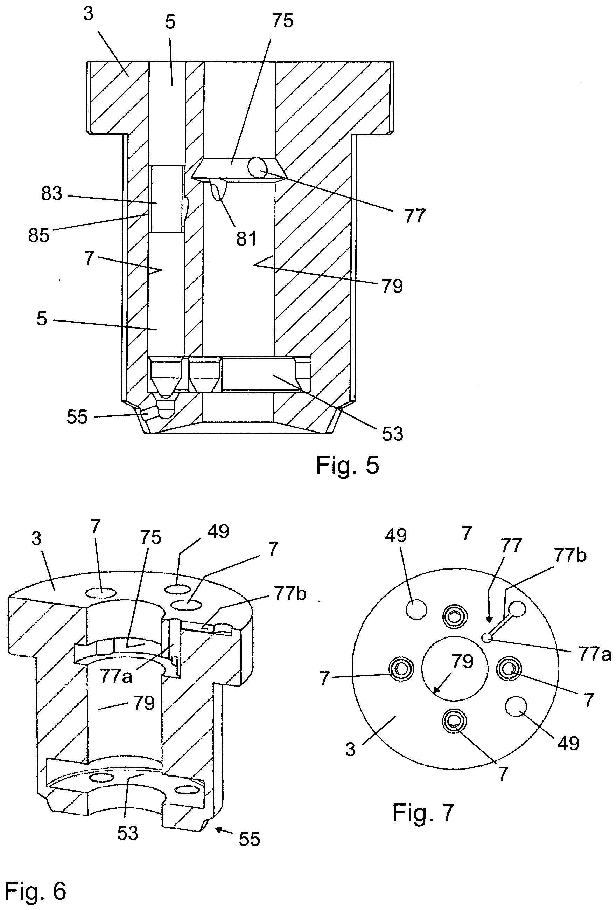

Anhand der Figuren 6 bis 8 wird nunmehr eine weitere Ausführungsform des erfindungsgemäßen Dual-Fuel-Kraftstoffinjektors 1 erläutert.

**Fig. 6** zeigt den ersten Düsenkörper 3 der weiteren Ausführungsform in einer Schnittansicht. Im Unterschied zu der vorhergehenden beschriebenen Ausführungsform nach Fig. 1 bis 5 ist der erste Düsenkörper 3 hierbei mit einem Mischleckage-Sammelkanal 75 versehen, welcher mittels einer Ringnut im ersten Düsenkörper 3 gebildet ist, welche die Aufnahmen 7 der Gasnadeln 5 unmittelbar anschneidet, insbesondere in einem längsmittleren Bereich derselben. Separate Anstiche 81 für die jeweiligen Aufnahmen 7 ausgehend von dem Mischleckage-Sammelkanal 75 sind hierbei vorteilhaft entbehrlich, woneben ein großes Mischleckage-Sammelvolumen in Form des Sammelkanals 75 bereitgestellt ist.

Die mit rechteckförmigem Querschnitt gebildete Sammelkanal-Nut ist im Unterschied zu der vorherigen Ausführungsform tiefer in den ersten Düsenkörper 3 eingebracht, insoweit bevorzugt in einem relativ materialstarken Bereich des Düsenkörpers 3 gebildet, vorliegend im Bereich eines Düsenkörperflansches. Hierdurch wird bei vorteilhaft unaufwändiger Herstellung dennoch eine hohe Stabilität bei weiterhin zuverlässiger Führung unterhalb und oberhalb des Mischleckage-Sammelkanals 75 und dabei guter Abdichtung an den ersten Düsennadeln 5 erzielt.

Weiterhin im Unterschied zu der Ausgestaltung gemäß Fig. 1 bis Fig. 5 ist der Mischleckage-Absteuerkanal 77 im ersten Düsenkörper 3 über einen Abschnitt 77a als axialer Bohrkanal bereitgestellt, welcher mit dem Mischleckage-Sammelkanal 75 kommuniziert und nachfolgend via einen radialen Abschnitt 77b, eingebracht am düsenfernen Ende des ersten Düsenkörpers 3, auf einfache Weise an einen weiteren axialen Abschnitt in der Zwischenscheibe 73 und dem zweiten Düsenkörper 11 kommunizierend angebunden ist.

**Fig. 7** veranschaulicht den derart gebildeten ersten Düsenkörper 3 in der Draufsicht.

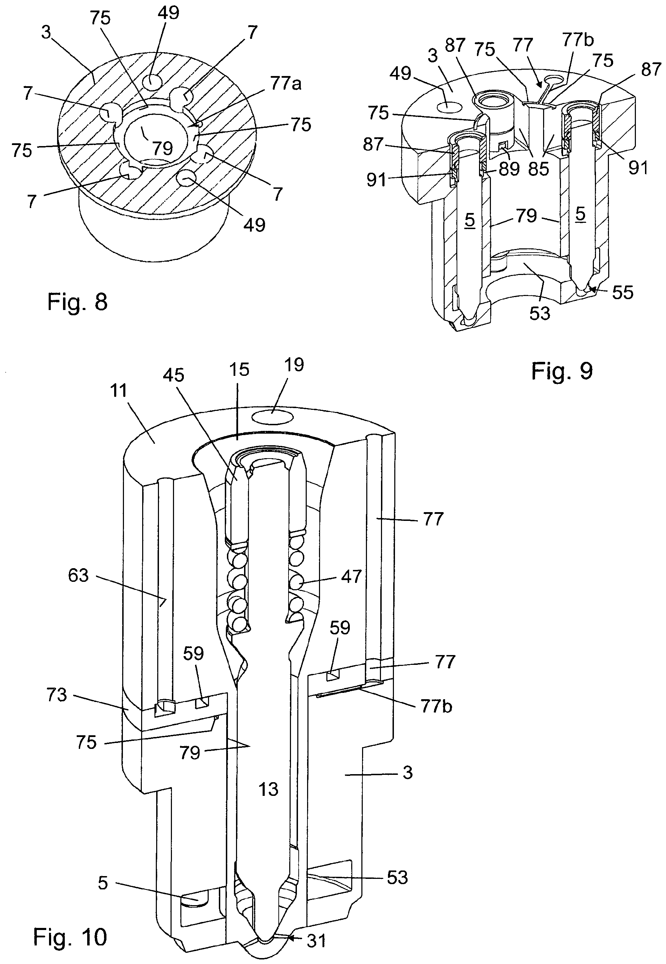

**Fig. 8****,** eine Ansicht eines Schnitts, welcher durch die Ebene des Mischleckage-Ringkanals 75 geführt ist, zeigt insbesondere den kommunizierenden Anschnitt der Aufnahmen 7 der ersten Düsennadeln 5 via den Mischleckage-Sammelkanal 75.

Anhand der Figuren 9 und Fig. 10 wird nachfolgend noch eine weitere Ausgestaltung des Dual-Fuel-Kraftstoffinjektors 1 näher erläutert.

**Fig. 9** zeigt den ersten Düsenkörper 3 der weiteren Ausführungsform des Dual-Fuel-Kraftstoffinjektors 1 mit darin aufgenommenen ersten Düsennadeln 5 in einer Schnittansicht.

Bei dieser Ausführungsform ist der Mischleckage-Sammelkanal 75 mittels einer die Aufnahmen 7 kommunizierend verbindenden Nut gebildet, welche Nut in die düsenferne Stirnseite des ersten Düsenkörpers 3 gearbeitet ist. Die kommunizierende Anbindung der Nut an die Aufnahmen 7 ist hierbei über Mischleckage-Sammelräume 85 realisiert, welche zur Bereitstellung eines Mischleckage-Sammelvolumens an einem jeweiligen düsenfernen Ende einer Aufnahme 7 mittels Querschnittsvergrößerung derselben gebildet sind.

Ein jeweiliger Mischleckage-Sammelraum 85 kann hierbei auf einfache Weise ausgehend von der düsenfernen Stirnseite des ersten Düsenkörpers 3 in denselben gearbeitet werden, zum Beispiel als Bohrung oder mittels anderweitem Materialabtrag. Ersichtlich sind bei dieser Ausgestaltung des Dual-Fuel-Kraftstoffinjektors 1 Nadelführungshülsen 87 in den jeweiligen Aufnahmen 7 bzw. den Mischleckage-Sammelräumen 85 vorgesehen, welche die ersten Gas-Düsennadeln 5 düsenfern endseitig führen. Über die Nadelführungshülsen 87 und korrespondierend bemessene Endabschnitte der jeweiligen ersten Düsennadeln 5 können hierbei auf einfache Weise vielfältige Steuerquerschnitte und/oder Steuerräume 57 für die ersten Düsennadeln 5 definiert werden.

Um sicherzustellen, dass etwaige über den führenden Abschnitt der Aufnahme 7 an der Aufnahme 7 entlangkriechende Gas-Leckage oder aus dem Steuerraum 57 in Richtung zur Gas-Düsenanordnung 55 kriechender Flüssigkraftstoff zuverlässig in den Mischleckage-Sammelraum 85 eintreten kann, kann die Nadelführungshülse 87 hierzu geeignet über einen Abschnittinsbesondere außerhalb des Steuerraums 57 - mit wenigstens einer Durchgangsöffnung 89 versehen ausgeführt sein, insbesondere an deren düsennahem, an einem Absatz des querschnittsvergrößerten Bereich abgestützten Ende. Wie in Fig. 9 gezeigt, kann alternativ eine Spannhülse 91 vorgesehen werden, welche die in dem querschnittsvergrößerten Bereich der Aufnahme 7 aufgenommene Nadelführungshülse 87 gegen ein deckelndes Element 73, insbesondere die Zwischenscheibe 73 drängt. Über eine oder mehrere radiale Durchgangsöffnungen 89 der Spannhülse 91 kann die jeweilige Gas- oder Flüssigleckage hierbei in den jeweiligen Mischleckage-Sammelraum 85 und hierüber in den Mischleckage-Sammelkanal 75 eintreten.

Zur Absteuerung der Mischleckage ist der Mischleckage-Sammelkanal 75 wiederum an einen Mischleckage-Absteuerkanal 77 kommunizierend angebunden. Ein Abschnitt des Mischleckage-Absteuerkanals 77 ist mittels eines radialen Abzweigs 77b ausgehend vom Mischleckage-Sammelkanal 75 ebenfalls an der Stirnseite des ersten Düsenkörpers 3 gebildet.

Fig. 10 zeigt den ersten Düsenkörper 3 nach Fig. 9 mit einer Zwischenscheibe 73 und einem zweiten 11 Düsenkörper wiederum zu einem Düsenkörpermodul des Dual-Fuel-Kraftstoffinjektors 1 zusammengefügt. Wie Fig. 10 veranschaulicht, ist der erste Düsenkörper 3 düsenfern endseitig mittels der Zwischenscheibe 73 gedeckelt, so dass der Mischleckage-Sammelkanal 75 zwischen dem ersten Düsenkörper 3 und der Zwischenscheibe 73 gebildet wird. Hierbei werden weiterhin auch die Mischleckage-Sammelräume 85 auf einfache Weise (als umschlossenes Volumen) definiert, daneben die Steuerräume 57 der ersten Düsennadeln 5 sowie der radiale Abschnitt 77b des Mischleckage-Absteuerkanals 77. Wie Fig. 10 weiter veranschaulicht, setzt sich der Mischleckage-Absteuerkanal 77 über Bohrabschnitte weiter durch die Zwischenscheibe 73 und den zweiten Düsenkörper 11 hindurch fort.

Ersichtlich wird hierbei ein vorteilhaft einfach zu realisierender und kompakter Aufbau des Dual-Fuel-Kraftstoffinjektors 1 erzielt.

## Patentansprüche

1. Dual-Fuel-Kraftstoffinjektor (1), welcher eine Mehrzahl von Düsennadeln (5, 13) aufweist, deren Hub je mittels Steuerfluid und einem zugeordneten Steuerraum (57, 37) steuerbar ist, wobei:
- die Mehrzahl von Düsennadeln (5, 13) eine Mehrzahl von ersten Düsennadeln (5) umfasst, welche in einem ersten Düsenkörper (3) des Dual-Fuel-Kraftstoffinjektors (1) für das selektive Ausbringen eines ersten Kraftstoffes je axial verschieblich angeordnet sind, wobei die ersten Düsennadeln (5) in dem ersten Düsenkörper (3) in jeweiligen Aufnahmen (7) angeordnet sind;
**dadurch gekennzeichnet, dass**
- der Dual-Fuel-Kraftstoffinjektor (1) einen Mischleckage-Sammelkanal (75) aufweist, welcher eine Mehrzahl von Aufnahmen (7) kommunizierend verbindet;
- am Dual-Fuel-Kraftstoffinjektor (1) weiterhin ein Mischleckage-Absteuerkanal (77) in Kommunikation mit dem Mischleckage-Sammelkanal (75) gebildet ist.

2. Dual-Fuel-Kraftstoffinjektor (1) nach Anspruch 1,
**dadurch gekennzeichnet, dass**
- der Mischleckage-Sammelkanal (75) am ersten Düsenkörper gebildet ist; und/oder
- die ersten Düsennadeln (5) in einer Umfangsrichtung des ersten Düsenkörpers (3) verteilt in dem ersten Düsenkörper (3) angeordnet sind.

3. Dual-Fuel-Kraftstoffinj ektor (1) nach einem der vorhergehenden Ansprüche,
**dadurch gekennzeichnet, dass**
- die Aufnahmen (7) der ersten Düsennadeln (5) sämtlich über den Mischleckage-Sammelkanal (75) kommunizierend verbunden sind; und/oder
- der Mischleckage-Sammelkanal (75) als die Aufnahmen (7) kommunizierend verbindender Ringkanal gebildet ist.

4. Dual-Fuel-Kraftstoffinjektor (1) nach einem der vorhergehenden Ansprüche,
**dadurch gekennzeichnet, dass**
- die Mehrzahl von Düsennadeln (5) eine zweite Düsennadel (13) umfasst, welche in einem zweiten Düsenkörper (11) des Dual-Fuel-Kraftstoffinjektors (1) für das selektive Ausbringen eines zweiten Kraftstoffes angeordnet ist;
- die ersten Düsennadeln (5) in dem ersten Düsenkörper (3) um den zweiten Düsenkörper (11) herum verteilt angeordnet sind, wobei der erste Düsenkörper (3) den zweiten Düsenkörper (11) umfängt;
- der Mischleckage-Sammelkanal (75) mittels erstem (3) und zweitem (11) Düsenkörper definiert ist.

5. Dual-Fuel-Kraftstoffinjektor (1) nach Anspruch 4,
**dadurch gekennzeichnet, dass**
- der Mischleckage-Sammelkanal (75) mittels einer Vertiefung gebildet ist, welche in eine Umfangsfläche (79) eines der Düsenkörper aus erstem (3) und zweitem (11) Düsenkörper eingebracht ist; und/oder
- die Vertiefung an einer Öffnungsseite mittels des weiteren Düsenkörpers aus erstem (3) und zweitem (11) Düsenkörper gedeckelt ist.

6. Dual-Fuel-Kraftstoffinjektor (1) nach einem der vorhergehenden Ansprüche,
**dadurch gekennzeichnet, dass**
- der Mischleckage-Sammelkanal (75) zwischen dem erstem Düsenkörper (3) und einem stirnseitig deckelnden Element (73) an dem ersten Düsenkörper (3) definiert ist.

7. Dual-Fuel-Kraftstoffinjektor (1) nach einem der vorhergehenden Ansprüche,
**dadurch gekennzeichnet, dass**
- der Mischleckage-Sammelkanal (75) über radiale Einstiche (81) mit den Aufnahmen (7) der ersten Düsennadeln (5) kommuniziert; und/oder
- der Mischleckage-Sammelkanal (75) die darüber kommunizierend verbundenen Aufnahmen (7) der ersten Düsennadeln (5) anschneidet.

8. Dual-Fuel-Kraftstoffinjektor (1) nach einem der vorhergehenden Ansprüche,
**dadurch gekennzeichnet, dass**
- an einer jeweiligen ersten Düsennadel (5) und/oder Aufnahme (7) ein Mischleckage-Sammelraum (85) bereitgestellt ist, über welchen die Aufnahmen (7) via den Mischleckage-Sammelkanal (75) kommunizierend verbunden sind.

9. Dual-Fuel-Kraftstoffinjektor (1) nach Anspruch 8,
**dadurch gekennzeichnet, dass**
- ein Mischleckage-Sammelraum (85) über einen Abschnitt einer jeweiligen Aufnahme (7) einer ersten Düsennadel (5) und/oder über einen Abschnitt einer jeweiligen ersten Düsennadel (5) gebildet ist.

10. Dual-Fuel-Kraftstoffinjektor (1) nach Anspruch 7,
**dadurch gekennzeichnet, dass**
- ein Mischleckage-Sammelraum (85) mittels einer wenigstens partiellen Querschnittserweiterung an der Aufnahme (7) oder einer abschnittsweisen Verjüngung einer ersten Düsennadel (5) gebildet ist; und/oder
- ein Mischleckage-Sammelraum (85) eine erste Düsennadel (5) über einen Abschnitt umgebend gebildet ist; und/oder
- ein Mischleckage-Sammelraum (85) an einem düsenfernen Ende einer Aufnahme (7) einer ersten Düsennadel (5) gebildet ist.

11. Dual-Fuel-Kraftstoffinjektor (1) nach einem der Ansprüche 8 bis 10,
**dadurch gekennzeichnet, dass**
- in der Aufnahme (7) einer ersten Düsennadel (5) eine Nadelführungshülse (87) in einem Mischleckage-Sammelraum (85) angeordnet ist.

12. Brennkraftmaschine,
**gekennzeichnet durch**
- wenigstens einen Dual-Fuel-Kraftstoffinjektor (1) nach einem der vorhergehenden Ansprüche.

## Claims

1. Dual-fuel fuel injector (1) which has a multiplicity of nozzle needles (5, 13), the stroke of which is controllable in each case by means of control fluid and an associated control chamber (57, 37), wherein:
- the multiplicity of nozzle needles (5, 13) comprises a multiplicity of first nozzle needles (5) which are each arranged in axially displaceable fashion in a first nozzle body (3) of the dual-fuel fuel injector (1) for the selective discharging of a first fuel, wherein the first nozzle needles (5) are arranged in the first nozzle body (3) in respective receptacles (7);
**characterized in that**
- the dual-fuel fuel injector (1) has a mixed leakage collecting channel (75) which connects a multiplicity of receptacles (7) in communicating fashion;
- on the dual-fuel fuel injector (1), a mixed leakage discharge channel (77) is furthermore formed so as to communicate with the mixed leakage collecting channel (75).

2. Dual-fuel fuel injector (1) according to Claim 1,
**characterized in that**
- the mixed leakage collecting channel (75) is formed on the first nozzle body; and/or
- the first nozzle needles (5) are arranged in the first nozzle body (3) so as to be distributed in a circumferential direction of the first nozzle body (3).

3. Dual-fuel fuel injector (1) according to any of the preceding claims,
**characterized in that**
- the receptacles (7) of the first nozzle needles (5) are all connected in communicating fashion via the mixed leakage collecting channel (75); and/or
- the mixed leakage collecting channel (75) is formed as an annular channel which connects the receptacles (7) in communicating fashion.

4. Dual-fuel fuel injector (1) according to any of the preceding claims,
**characterized in that**
- the multiplicity of nozzle needles (5) comprises a second nozzle needle (13) which is arranged in a second nozzle body (11) of the dual-fuel fuel injector (1) for the selective discharging of a second fuel;
- the first nozzle needles (5) are arranged in the first nozzle body (3) so as to be distributed around the second nozzle body (11), wherein the first nozzle body (3) encircles the second nozzle body (11);
- the mixed leakage collecting channel (75) is defined by means of first (3) and second (11) nozzle body.

5. Dual-fuel fuel injector (1) according to Claim 4,
**characterized in that**
- the mixed leakage collecting channel (75) is formed by means of a depression which is formed into a circumferential surface (79) of one of the nozzle bodies out of first (3) and second (11) nozzle body; and/or
- the depression is covered at an opening side by means of the further nozzle body out of first (3) and second (11) nozzle body.

6. Dual-fuel fuel injector (1) according to any of the preceding claims,
**characterized in that**
- the mixed leakage collecting channel (75) is defined between the first nozzle body (3) and a covering element (73) on an end side on the first nozzle body (3).

7. Dual-fuel fuel injector (1) according to any of the preceding claims,
**characterized in that**
- the mixed leakage collecting channel (75) communicates via radial indentations (81) with the receptacles (7) of the first nozzle needles (5); and/or
- the mixed leakage collecting channel (75) intersects the receptacles (7), which are connected in communicating fashion via said mixed leakage collecting channel, of the first nozzle needles (5).

8. Dual-fuel fuel injector (1) according to any of the preceding claims,
**characterized in that**
- on a respective first nozzle needle (5) and/or receptacle (7), there is provided a mixed leakage collecting space (85) via which the receptacles (7) are connected in communicating fashion via the mixed leakage collecting channel (75).

9. Dual-fuel fuel injector (1) according to Claim 8,
**characterized in that**
- a mixed leakage collecting space (85) is formed by means of a portion of a respective receptacle (7) of a first nozzle needle (5) and/or by means of a portion of a respective first nozzle needle (5).

10. Dual-fuel fuel injector (1) according to Claim 7,
**characterized in that**
- a mixed leakage collecting space (85) is formed by means of an at least partial cross-sectional widening at the receptacle (7) or a narrowing, in certain portions, of a first nozzle needle (5); and/or
- a mixed leakage collecting space (85) is formed so as to surround a first nozzle needle (5) over a portion; and/or
- a mixed leakage collecting space (85) is formed at a nozzle-averted end of a receptacle (7) of a first nozzle needle (5).

11. Dual-fuel fuel injector (1) according to any of Claims 8 to 10,
**characterized in that**
- in the receptacle (7) of a first nozzle needle (5), a needle guide sleeve (87) is arranged in a mixed leakage collecting space (85).

12. Internal combustion engine,
**characterized by**
- at least one dual-fuel fuel injector (1) according to any of the preceding claims.

## Revendications

1. Double injecteur de carburant (1), lequel comprend une pluralité d'aiguilles de buse (5, 13) dont la course peut être commandée respectivement au moyen d'un fluide de commande et d'une chambre de commande associée (57, 37), dans lequel :
- la pluralité d'aiguilles de buse (5, 13) comporte une pluralité de premières aiguilles de buse (5), lesquelles sont disposées de manière respectivement mobile axialement dans un premier corps de buse (3) du double injecteur de carburant (1) pour la distribution sélective d'un premier carburant, dans lequel les premières aiguilles de buse (5) sont disposées dans le premier corps de buse (3) dans des logements respectifs (7) ;
**caractérisé en ce que**
- le double injecteur de carburant (1) comprend un canal collecteur de fuites mixtes (75), lequel relie de manière communicante une pluralité de logements (7) ;
- sur le double injecteur de carburant (1) est en outre formé un canal d'évacuation de fuites mixtes (77) en communication avec le canal collecteur de fuites mixtes (75).

2. Double injecteur de carburant (1) selon la revendication 1,
**caractérisé en ce que**
- le canal collecteur de fuites mixtes (75) est formé sur le premier corps de buse ; et/ou
- les premières aiguilles de buse (5) sont disposées dans le premier corps de buse (3) de manière répartie dans une direction périphérique du premier corps de buse (3).

3. Double injecteur de carburant (1) selon l'une des revendications précédentes,
**caractérisé en ce que**
- les logements (7) des premières aiguilles de buse (5) sont tous reliés de manière communicante par le biais du canal collecteur de fuites mixtes (75) ; et/ou
- le canal collecteur de fuites mixtes (75) est formé en tant que canal annulaire reliant les logements (7) de manière communicante.

4. Double injecteur de carburant (1) selon l'une des revendications précédentes,
**caractérisé en ce que**
- la pluralité d'aiguilles de buse (5) comporte une deuxième aiguille de buse (13), laquelle est disposée dans un deuxième corps de buse (11) du double injecteur de carburant (1) pour la distribution sélective d'un deuxième carburant ;
- les premières aiguilles de buse (5) sont disposées dans le premier corps de buse (3) de manière répartie autour du deuxième corps de buse (11), le premier corps de buse (3) entourant le deuxième corps de buse (11) ;
- le canal collecteur de fuites mixtes (75) est défini au moyen du premier (3) et du deuxième (11) corps de buse.

5. Double injecteur de carburant (1) selon la revendication 4,
**caractérisé en ce que**
- le canal collecteur de fuites mixtes (75) est formé au moyen d'un évidement, lequel est ménagé dans une surface périphérique (79) de l'un des corps de buse parmi le premier (3) et le deuxième (11) corps de buse ; et/ou
- l'évidement est recouvert, sur un côté d'ouverture, au moyen de l'autre corps de buse parmi le premier (3) et le deuxième (11) corps de buse.

6. Double injecteur de carburant (1) selon l'une des revendications précédentes,
**caractérisé en ce que**
- le canal collecteur de fuites mixtes (75) est défini entre le premier corps de buse (3) et un élément de recouvrement frontal (73) sur le premier corps de buse (3).

7. Double injecteur de carburant (1) selon l'une des revendications précédentes,
**caractérisé en ce que**
- le canal collecteur de fuites mixtes (75) communique avec les logements (7) des premières aiguilles de buse (5) par le biais d'entailles radiales (81) ; et/ou
- le canal collecteur de fuites mixtes (75) croise les logements (7) des premières aiguilles de buse (5) reliés de manière communicante par le biais de celui-ci.

8. Double injecteur de carburant (1) selon l'une des revendications précédentes,
**caractérisé en ce que**
- une chambre collectrice de fuites mixtes (85) est réalisée au niveau d'une première aiguille de buse respective (5) et/ou d'un logement (7), chambre collectrice par le biais de laquelle les logements (7) sont reliés de manière communicante via le canal collecteur de fuites mixtes (75).

9. Double injecteur de carburant (1) selon la revendication 8,
**caractérisé en ce que**
- une chambre collectrice de fuites mixtes (85) est formée sur une partie d'un logement respectif (7) d'une première aiguille de buse (5) et/ou sur une partie d'une première aiguille de buse respective (5).

10. Double injecteur de carburant (1) selon la revendication 7,
**caractérisé en ce que**
- une chambre collectrice de fuites mixtes (85) est formée au moyen d'un élargissement de section transversale au moins partiel au niveau du logement (7) ou d'un rétrécissement dans certaines zones d'une première aiguille de buse (5) ; et/ou
- une chambre collectrice de fuites mixtes (85) est formée de manière à entourer une première aiguille de buse (5) sur une partie ; et/ou
- une chambre collectrice de fuites mixtes (85) est formée à une extrémité, opposée à la buse, d'un logement (7) d'une première aiguille de buse (5).

11. Double injecteur de carburant (1) selon l'une des revendications 8 à 10,
**caractérisé en ce que**
- une douille de guidage d'aiguille (87) est disposée dans une chambre collectrice de fuites mixtes (85) dans le logement (7) d'une première aiguille de buse (5).

12. Moteur à combustion interne,
**caractérisé par**
- au moins un double injecteur de carburant (1) selon l'une des revendications précédentes.
